# EUROPÄISCHE PATENTSCHRIFT

(11) **EP 2 689 148 B1**
(45) Veröffentlichungstag und Bekanntmachung des Hinweises auf die Patenterteilung: **03.06.2015**
(21) Anmeldenummer: 12706566.2
(22) Anmeldetag: 28.02.2012
(51) Int. Cl.: F16B 13/06, B21H 3/02

(54) **ANKERBOLZEN UND HERSTELLUNGSVERFAHREN**
ANCHOR BOLT AND PRODUCTION METHOD
BOULON D'ANCRAGE ET PROCÉDÉ DE FABRICATION

(30) Priorität: 23.03.2011 DE 102011005999; 20.05.2011 DE 102011076180
(43) Veröffentlichungstag der Anmeldung: 29.01.2014
(73) Patentinhaber: HILTI Aktiengesellschaft, 9494 Schaan (LI)
(72) Erfinder: SHIMAHARA, Hideki, CH-9470 Buchs (CH); WINKLER, Mark, A-6845 Hohenems (AT); WISSLING, Matthias, CH-9000 St. Gallen (CH)
(74) Vertreter: Hilti Aktiengesellschaft Corporate Intellectual Property
(86) Internationale Anmeldenummer: PCT/EP2012/053320
(87) Internationale Veröffentlichungsnummer: WO 2012/126700

(56) Entgegenhaltungen:
- EP-A1- 0 627 567
- EP-A1- 0 724 085
- EP-A1- 1 243 801
- CA-A1- 953 958

## Beschreibung

### GEBIET DER ERFINDUNG

Die vorliegende Erfindung betrifft einen Ankerbolzen für einen Spreizanker und einen solchen Spreizanker, gemäß dem Oberbegriff von Anspruch 1 und aus CA 953958 A1 bekannt. Ferner betrifft die Erfindung ein Herstellungsverfahren für den Ankerbolzen.

### OFFENBARUNG DER ERFINDUNG

Der erfindungsgemäße Ankerbolzen für einen Spreizanker. Der Ankerbolzen hat einen zu einer Achse koaxial angeordneten Spreizkörper, wobei eine Mantelfläche des Spreizkörpers in Umfangsrichtung alternierend Rippen und Rillen aufweist. Dachflächen der Rippen entfernen sich in einer Richtung längs der Achse monoton von der Achse. Bodenflächen der Rillen nähern sich in der Richtung monoton der Achse an. Die Bodenflächen der Rippen und die Bodenflächen der Rillen haben längs der Achse eine entgegengesetzte Neigung bezogen auf die Achse.

Nach einem Aspekt der Erfindung hat der Ankerbolzen für einen Spreizanker einen zu einer Achse koaxial angeordneten Spreizkörper. Eine Mantelfläche des Spreizkörpers ist in eine entlang einer Richtung längs der Achse sich radial erweiternde, in Umfangsrichtung konvexer erste Hüllkurve eingeschrieben. In die Mantelfläche ist eine entlang der Richtung sich radial verringernde, in Umfangsrichtung konvexe zweite Hüllkurve eingeschrieben. Die Mantelfläche hat in Umfangsrichtung alternierend erste Flächenabschnitte, z.B. die Dachflächen, die die erste Hüllkurve berühren, und zweite Flächenabschnitte, z.B. die Bodenflächen, die die zweite Hüllkurve berühren.

Die ersten Flächenabschnitte berühren durchgehend entlang ihrer gesamten Abmessung längs der Achse die erste Hüllkurve. Die zweiten Flächenabschnitte berühren durchgehend längs ihrer gesamten Abmessung die zweite Hüllkurve. Die Eigenschaft einer in Umfangsrichtung konvexer Hüllkurve ist, dass eine Verbindungslinie beliebiger zweier Punkte der Hüllkurve innerhalb des von der Hüllkurve umgebenen Volumens liegt, sofern diese zwei Punkte in einer Ebene senkrecht zu der Achse gewählt sind. Bei der sich entlang der Richtung radial erweiternden Hüllkurve ist ein Inhalt einer ersten Querschnittsfläche senkrecht zu der Achse geringer als ein Inhalt einer zweiten Querschnittsfläche, welche in die Richtung parallel zu der ersten Querschnittsfläche versetzt angeordnet ist. Hervorzuhebende Beispiele für die sich längs einer Richtung radial erweiternder oder verringernder, konvexer Hüllkurven im Kontext des genannten Ankerbolzens sind die Mantelflächen eines Konus, eines Kegelstumpfs, einer Pyramide, einer Halbkugel, längs der Achse konkav gewölbte, trichterförmige Körper et cetera.

Die zweite Hüllkurve liegt innerhalb der ersten Hüllkurve, vorzugsweise sind die beiden Hüllkurve zueinander koaxial, zum Beispiel koaxial zu der Achse. Eine Neigung der ersten Flächenabschnitte zu der Achse ist gegenläufig zu einer Neigung der zweiten Flächenabschnitte zu der Achse. Während ein radialer Abstand der ersten Flächenabschnitte zu der Achse in die Richtung erhöht, verringert sich ein radialer Abstand der zweiten Flächenabschnitte zu der Achse. Die Neigungen bzw. Winkel zu der Achse können längs der Achse konstant oder variabel sein,

Eine Ausgestaltung sieht vor, dass die Mantelfläche eine in einer Ebene senkrecht zu der Achse verlaufende ringförmige, konvexe Linie aufweist, an die die ersten Flächenabschnitte und die zweiten Flächenabschnitte angrenzen. Die erste Hüllkurve und die zweite Hüllkurve berühren sich in der konvexen Linie. Die Mantelfläche ist in diesem Bereich glatt, das heißt es gibt keine radial vorspringenden und radial zurückgenommenen Flächenabschnitte. Der Ring ist in der Richtung vor den beiden Hüllkurve bzw. der strukturierten Mantelfläche mit den ersten und zweiten Flächenabschnitten.

Gemäß einer Ausgestaltung hat der Ankerbolzen in einer Schnittebene einen größten radialen Abstand der Mantelfläche zu der Achse, insbesondere der Dachfläche zu der Achse, ferner gibt es in der Schnittebne einen geringsten radialen Abstand der Mantelfläche zu der Achse. Die Schnittebene ist senkrecht zu der Achse. Ferner schneidet die Schnittebene die Rippen und die Rillen. Eine erste Differenz zwischen dem jeweils größten radialen Abstand und dem geringsten radialen Abstand kann in einer ersten Schnittebene bestimmt werden. Eine zweite Differenz wird in einer parallelen zweiten Schnittebene bestimmt, welche in die Richtung, in welche der Spreizkonus sich aufweitet, versetzt ist. Die zweite Differenz ist größer als die erste Differenz. Die Differenz nimmt kontinuierlich für längs der Richtung aufeinanderfolgende Schnittebenen zu. Ein Inhalt einer Querschnittsfläche des Spreizkörpers kann in jeder der Schnittebene gleich sein.

Eine Ausgestaltung sieht vor, dass längs der Achse ein Inhalt von Querschnittsflächen des Spreizkörpers in mehr als zwei längs der Achse zueinander versetzter und zu der Achse senkrechter Ebenen gleich ist, wenn die Ebenen die Rippen und die Rillen schneiden. Der Inhalt der Querschnittsflächen kann für alle Ebenen durch die ersten und zweiten Flächenabschnitte gleich sein. Vorzugsweise ist der Inhalt, trotz eines sich ändernden Profils längs der Achse, längs der Achse konstant. Der Volumenzuwachs aufgrund der radial vorspringenden Flächenabschnitte wird durch die radial zurückgenommenen Flächenabschnitte ausgeglichen. In einer Ausgestaltung hat der Ankerbolzen einen mit einem Gewinde versehenen Schaft. Ein Inhalt einer Querschnittsfläche in einer Ebene senkrecht zu der Achse und durch das Gewinde kann gleich einem der Inhalte der Querschnittsflächen durch den Spreizkörper sein.

Eine Ausgestaltung sieht vor, dass ein Verhältnis einer in Umfangsrichtung bestimmten Abmessung des ersten Flächenabschnitts, z.B. der Rippen, zu einer in Umfangsrichtung bestimmten Abmessung des zweiten Flächenabschnitts, z.B. der Rillen, zwischen 0,5 und 2 liegt. Eine Breite der ersten und zweiten Flächenabschnitte ist vorzugsweise in dem angegebenen Verhältnis etwa gleich groß. Eine Ausgestaltung sieht vor, dass ein größter radialer Abstand der ersten Flächenabschnitte bezogen zu der Achse zwischen zehn Prozent und 25 Prozent größer als der geringste radiale Abstand der zweiten Flächenabschnitte zu der Achse ist.

Ein Spreizanker hat einen der beschriebenen Ankerbolzen und eine Spreizhülse, welche einen an den Spreizkörper angrenzenden zylindrischen Hals umgreift. Der Schaft ist ferner beispielsweise mit einem Gewinde und einer Mutter versehen.

Nach einem Aspekt der Erfindung nutzt ein Herstellungsverfahren für einen Ankerbolzen eines Spreizankers folgenden Schritt: Abrollen eines zylindrischen Rohlings auf einer Oberfläche mit einem aufgebrachten Walzprofil für einen strukturierten, konusförmigen Spreizkörper. Das Walzprofil weist längs einer Rollrichtung alternierend Erhebungen und Vertiefung auf, wobei in einer ersten Schnittebene senkrecht zu einer Achse des Rohlings die Erhebungen gegenüber der Vertiefung um einen ersten Hub senkrecht zu der Oberfläche angehoben sind und in einer zu der ersten Schnittebene in einer zur Achse parallelen Richtung versetzten, parallelen zweiten Schnittebene die Erhebungen gegenüber der Vertiefung um einen zweiten Hub senkrecht zu der Oberfläche angehoben sind und der erste Hub geringer als der zweite Hub ist. Die Richtung zeigt von einem Bereich für das Formen eines Gewindes oder eines Halses zu dem Spreizkörper. Die Erhebungen können längs der Richtung sich zunehmend von der Oberfläche abheben und die Vertiefungen längs der Richtung zunehmend gegenüber der Oberfläche absinken.

Eine Ausgestaltung sieht vor, dass der Rohling über einen trapezförmiges Walzprofil abgerollt wird, um einen Durchmesser des Rohlings auf einen Durchmesser für einen Hals des Ankerbolzens zu reduzieren, und einen konvex, konusförmigen Übergang zwischen dem Hals und dem strukturierten, konusförmigen Spreizkörper auszubilden.

Ein Spreizanker kann durch Herstellen eines Ankerbolzens nach vorhergehend beschriebenen Schritten und Umwickeln eines Halses mit einem Blechstreifen zum Ausbilden einer Hülse hergestellt werden.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 einen Spreizanker in einer Seitenansicht;
Fig. 2 einen Querschnitt durch den Anker in der Ebene II-II
Fig. 3 einen Querschnitt durch den Anker in der Ebene III-III
Fig. 4 einen Querschnitt durch den Anker in der Ebene IV-IV
Fig. 5 eine vergrößerte Darstellung eines Spreizkörpers des Spreizankers
Fig. 6 ein Walzprofil zum Herstellen eines Ankerbolzens,
Fig. 7 ein durch das Walzprofil teilumgeformter Rohling

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

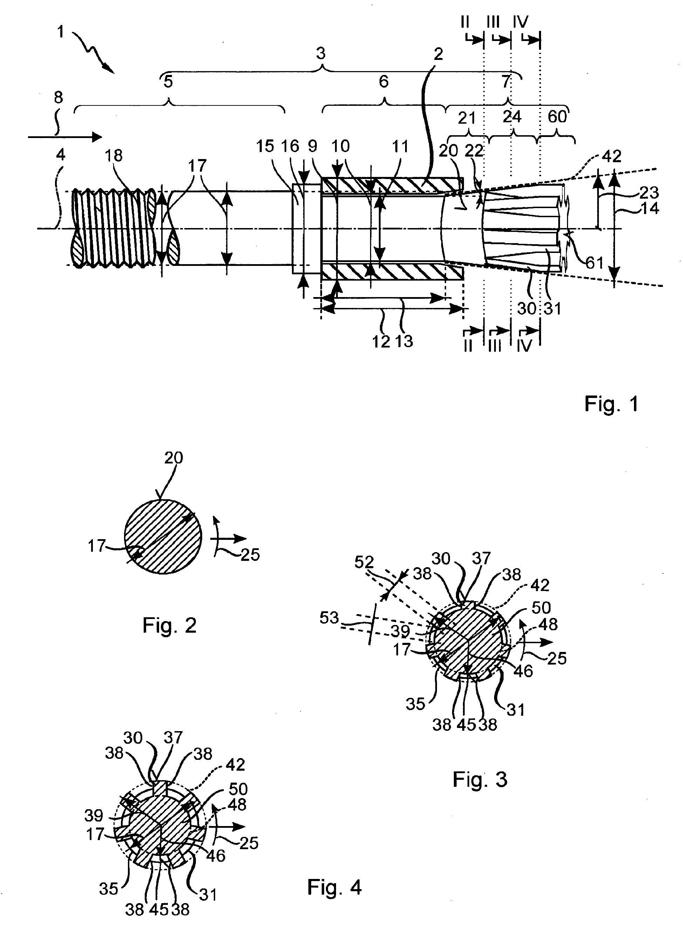

Fig. 1 zeigt einen mehrteiligen Spreizanker **1,** der eine Spreizhülse **2** und einen Ankerbolzen **3** beinhaltet. Der beispielhafte Ankerbolzen **3** ist einteilig ausgebildet und hat längs einer Achse **4** aufeinanderfolgend einen Schaft **5,** einen Hals **6** und einen Spreizkörper **7.** Die Richtung von dem Schaft **5** zu dem Spreizkörper **7** wird nachfolgend Setzrichtung **8** genannt.

Die Spreizhülse **2** sitzt anfänglich auf dem zylindrischen Hals **6** des Ankerbolzen **3.** Beim Setzen des Spreizankers **1** kann der an den Hals **6** angrenzende Spreizkörper **7** des Ankerbolzens **3** in die Spreizhülse **2** hineingetrieben werden und diese in radialer Richtung aufweiten. Die Spreizhülse **2** wird dabei an eine Wand eines Lochs geklemmt.

Die Spreizhülse **2** kann ein um den Hals **6** gewickelter Blechstreifen sein. Ein Außendurchmesser **9** der Spreizhülse **2** kann der größte Durchmesser des mehrteiligen Spreizankers **1** sein. Ein Anwender wird einen Durchmesser eines Lochs, in das der Spreizanker **1** zu setzen ist, gleich dem Außendurchmesser **9** der Spreizhülse **2** wählen. Der mehrteilige Spreizanker **1** wird mit dem Spreizkörper **7** voran in das Loch hineingesteckt. Die Spreizhülse **2** gelangt dabei in Kontakt mit der Wand des Lochs. Der Ankerbolzen **3** wird teilweise aus dem Loch herausgezogen, wodurch der Spreizkörper **7** in die Spreizhülse **2** hineingetrieben wird. Die Spreizhülse 2 bleibt anfänglich aufgrund der Reibung mit der Wand und später in aufgespreizten Zustand aufgrund des radialen Kraftschlusses mit der Wand stehen.

Der Hals **6** ist vorzugsweise ein glatter zylindrischer Bereich des Ankerbolzens **3.** Die Spreizhülse **2** kann sich leichtgängig auf dem Hals **6** längs der Achse **4** bewegen. Ein Innendurchmesser **10** Spreizhülse **2** ist etwas größer als ein Durchmesser **11** des Halses **6** gewählt. Eine Länge **12** der Spreizhülse **2** kann etwas größer, beispielsweise um bis zu 20 Prozent, als eine Länge **13** des Halses **6** sein.

Der Spreizkörper **7** schließt sich unmittelbar an den Hals **6** an. Der beispielhafte Spreizkörper **7** ist von einem konusförmigen Grundkörper abgeleitet, dessen Außendurchmesser **14** in Setzrichtung **8** fortlaufend oder monoton zunimmt.

Auf der gegenüberliegenden Seite des Spreizkörpers **7** schließt sich der Schaft **5** an den Hals **6** an. Zwischen dem Schaft **5** und dem Hals **6** kann längs der Achse **4** ein unmittelbar an den Hals **6** angrenzender Bund **15** vorgesehen sein. Ein Durchmesser **16** des Bundes **15** ist größer als der Innendurchmesser **10** der Spreizhülse **2.** Beim Einstecken des Spreizankers **1** in das Loch, steht die Spreizhülse **2** an dem Bund **15** an und wird nicht längs des Schaftes **5** abgestreift.

Der Schaft **5** ist ein im wesentlichen zylindrischer Abschnitt des Ankerbolzens **3.** Ein Durchmesser des Schafts **5,** nachfolgend als Basisdurchmesser **17** bezeichnet, ist über dessen gesamte Länge konstant. Der Schaft **5** kann mit einem Gewinde **18** versehen sein. Ein über zwei Gewindegänge des Gewindes **18** gemittelter Durchmesser, auch als Flankendurchmsser bezeichnet, ist gleich dem Basisdurchmesser **17.**

Eine Mantelfläche **20** des Spreizkörpers **7** entspricht in einem ersten Bereich **21,** der unmittelbar an den Hals **6** angrenzt, einer Mantelfläche eines Konus. Die Mantelfläche **20** im ersten Bereich **21** hat kreisförmige Querschnitte senkrecht zur Achse **4.** Es sind keine lokalen Vertiefungen, wie Dellen, Rillen, oder Vorsprünge, wie Rippen, Noppen etc., vorgesehen. Die Mantelfläche **20** hat längs der Achse **4** eine gegenüber der Achse **4** vorzugsweise gleichbleibende Neigung, welche durch einen konstanten Winkel **22,** zum Beispiel im Bereich zwischen 5 Grad und 20 Grad, zwischen einer tangentialen Ebene an die Mantelfläche **20** und der Achse **4** angegeben ist. Der Außendurchmesser **14** oder radialer Abstand **23** der Mantelfläche **20** von der Achse **4** nimmt proportional zu einer Entfernung von dem Hals **6** zu. Der radiale Abstand **23** kann beispielsweise zwischen 10 % und 50 % längs der Achse **4** zunehmen, d.h. der radiale Abstand am Ende der Neigung ist um wenigstens 10 %, beispielsweise weniger als 50 % größer, als der radiale Abstand am Anfang der Neigung. Die Neigung oder Zunahme des Außendurchmessers **14** kann auch progressiv sein, d.h. der Winkel **22** vergrößert sich zunehmend, der radiale Abstand **23** wächst schneller als proportional. Alternativ kann die Zunahme auch abschnittswiese degressiv sein, z.B. wie bei einer Halbkugel.

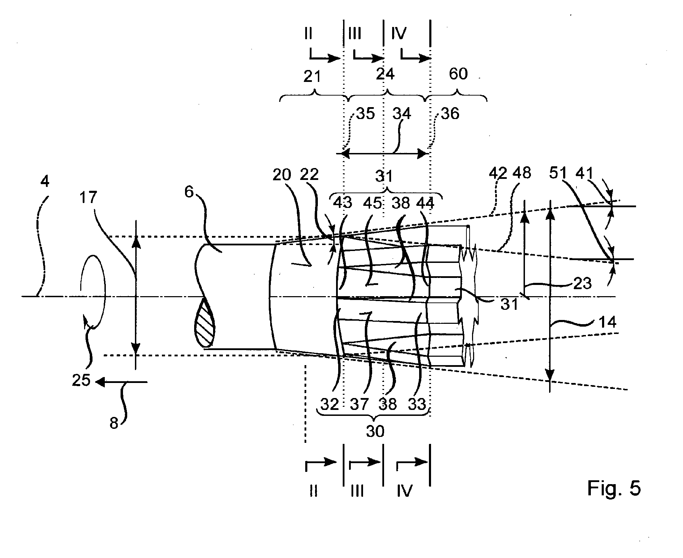

An den ersten Bereich **21** schließt sich ein zweiter Bereich **24** an, in welchem die Mantelfläche **20** strukturiert ist. Entlang einer Umfangsrichtung **25** um die Achse **4** sind abwechselnd Rippen **30** und Rillen **31** angeordnet. Die dargestellte Anzahl von sieben Rippen **30** und entsprechend sieben Rillen **31** ist beispielhaft, die Anzahl liegt vorzugsweise im Bereich zwischen 5 und 16. Fig. 2 zeigt einen Querschnitt durch den Spreizkörper **7** in der Ebene II-II an dem Übergang von dem ersten Bereich **21** zu dem zweiten Bereich **24.** Fig. 3 zeigt einen Querschnitt in der Ebene III-III bei etwa der Mitte des zweiten Bereichs **24** und Fig. 4 einen Querschnitt in der Ebene IV-IV an dem von dem Hals **6** entfernten Ende des zweiten Bereichs **24.** Der Durchmesser des Konus 7 in der Ebene II-II kann dem Basisdurchmesser entsprechen. Fig. 5 ist eine vergrößerte Ansicht des Spreizkörpers **7.**

Die dargestellten Rippen **30** sind parallel zu der Achse **4** ausgerichtet. Ein vorderes Ende **32** der Rippen **30** grenzt an den ersten Bereich **21** an. Ein hinteres Ende **33** der Rippen **30** ist gegenüber dem vorderen Ende **32** längs der Achse **4** in Setzrichtung versetzt. Die Rippen **30** können alle eine gleich große Abmessung **34** längs der Achse **4** aufweisen, insbesondere können die vorderen Enden **32** aller Rippen **30** in einer ersten Ebene **35** senkrecht zu der Achse **4** liegen und die hinteren Enden **33** aller Rippen **30** in einer zweiten Ebene **36** senkrecht zu der Achse **4** liegen. Jede der Rippen **30** hat jeweils eine im wesentlichen radial von der Achse **4** wegweisende Dachfläche **37,** welche eben oder gewölbt sein kann. Die Dachfläche **37** verläuft durchgehend von dem vorderen Ende **32** zu dem hinteren Ende **33.** Die Rippen **30** sind in Umfangsrichtung **25** durch Flanken **38** abgeschlossen. Die Flanken **38** sind schräg, z.B. senkrecht oder mit einem Winkel zwischen 60 Grad und 120 Grad, zu der Dachfläche **37** orientiert und verlaufen von der Dachfläche **37** nach Innen zu der Achse **4.** Die Flanken **38** können eben sein. Die Dachfläche **37** einer Rippe **30** enthält somit den oder die Punkte eines jeden Querschnitts senkrecht zur Achse **4,** welche den größten radialen Abstand **39** zu der Achse **4** aufweisen. Die Dachfläche **37** enthält zumindest eine längs der Achse **4,** das heißt von dem vorderen Ende **32** zu dem hinteren Ende **33,** geschlossene Linie aus diesen Punkten.

Die Dachflächen **37** ist derart gegenüber Achse **4** geneigt, dass sich der radiale Abstand **39** zwischen der jeweiligen Dachfläche **37** und der Achse **4** entlang der Achse **4** in Setzrichtung **8** erhöht. Der radiale Abstand **39** der Rippe **30** ist an ihrem vorderen Ende **32** vorzugsweise gleich der Hälfte des Basisdurchmessers **17.** An dem hinteren Ende **33** ist der radiale Abstand **39** um wenigstens 5% größer als der halbe Basisdurchmesser **17,** maximal 20 % größer als der halbe Basisdurchmesser **17.** Die Neigung oder ein Winkel **41** zwischen der Dachfläche **37** und der Achse **4** kann in einer Schnittebene bestimmt werden, in welcher die Achse **4** liegt. Die Neigung kann längs der Achse **4** wie dargestellt konstant sein. Alternativ kann die Neigung progressiv oder abschnittsweise degressiv sein. Die Steigung der Dachflächen **37** ist in Setzrichtung **8** jedoch durchgehend positiv, d.h. der radiale Abstand **39** vergrößert sich.

Die Dachflächen **37** prägen eine konusförmige Gestalt des Spreizkörpers 7. Der von den Dachflächen **37** beschriebene Rotationskörper ist ein Konusstumpf. Die Oberfläche des Rotationskörpers definiert eine einhüllende Fläche **42.** Die Mantelfläche **20** ist im zweiten Bereich **24** in die konusförmige einhüllende Fläche **42** derart eingeschrieben, dass die Dachflächen **37** über ihre gesamte Abmessung die einhüllende Fläche **42** berühren. Die Dachflächen **37** berühren die einhüllende Fläche **42** wenigstens entlang einer durchgehenden Linie von dem vorderen Ende **32** bis zu dem hinteren Ende **33.** Die in Umfangsrichtung **25** konvexe einhüllende Fläche **42** blendet die in Umfangsrichtung **25** aufgrund der Rillen **31** lokal auftretenden Vertiefungen aus und beschreibt daher das tendenzielle sich aufweitende Verhalten der Mantelfläche **20** in Setzrichtung **8.** Ein Radius oder Außendurchmesser **14** der einhüllenden Fläche **42** vergrößert sich kontinuierlich oder monoton entlang der Setzrichtung **8.**

Die Rillen **31** verlaufen vorgegeben durch die Rippen **30** ebenfalls parallel zu der Achse **4.** Vordere Enden **43** der Rillen **31** können in der gleichen ersten Ebene **35** wie die vorderen Enden **32** der Rippen **30** liegen. Die hinteren Enden **44** der Rillen **31** können in der gleichen zweiten Ebene **36** wie die hinteren Enden **33** der Rippen **30** liegen. Jede der Rillen **31** hat eine im wesentlichen radial von der Achse **4** wegweisende Bodenfläche **45,** welche eben oder gewölbt sein kann. Die Bodenfläche **45** verbindet durchgehend das vordere Ende **43** mit dem hinteren Ende **44** der Rille **31.** Jeweils zwei einander zugewandte der Flanken **38** grenzen an eine der Bodenflächen **45** in Umfangsrichtung **25** an. Die Flanken **38** laufen von der Bodenfläche **45** nach Außen, d.h. entfernen sich von der Achse **4.** Die Bodenfläche **45** einer Rille **31** enthält somit den oder die Punkte eines jeden Querschnitts senkrecht zur Achse **4,** welche den geringsten radialen Abstand **46** zu der Achse 4 aufweisen.

Die Bodenflächen **45** ist derart gegenüber Achse **4** geneigt, dass sich der radiale Abstand **46** zwischen der jeweiligen Bodenfläche **45** und der Achse **4** entlang der Achse **4** in Setzrichtung **8** verringert. Der radiale Abstand **46** der Bodenfläche **45** ist am ihrem vorderen Ende **43** vorzugsweise gleich dem halben Basisdurchmesser 17, an dem hinteren Ende **44** kann der radiale Abstand **46** zwischen 5 % und 20 % geringer als der halbe Basisdurchmesser **17** sein. Eine Neigung oder ein Winkel **47** zwischen der Bodenfläche **45** und der Achse **4** kann in einer Schnittebene bestimmt werden, in welcher die Achse **4** liegt. Die Neigung kann längs der Achse **4** wie dargestellt konstant sein. Alternativ kann die Neigung progressiv oder abschnittsweise degressiv sein. Die Steigung Bodenflächen **45** ist in Setzrichtung **8** jedoch durchgehend negativ, d.h. der radial Abstand **46** verringert sich.

Eine konusförmige eingeschriebene Fläche **48** berührt im zweiten Abschnitt **24** die Mantelfläche **20** jeweils an den Bodenflächen **45.** Die eingeschriebene Fläche **48** ich vollständig innerhalb des von der Mantelfläche **20** umschriebenen Volumens, das heißt die eingeschriebene Fläche **48** und die Mantelfläche **20** schneiden einander nicht. Die eingeschriebene Fläche **48** ist somit eine von ihnen anliegende einhüllende Fläche der Mantelfläche **20.** Die eingeschriebene Fläche **48** berührt die Bodenflächen **45** jeweils durchgehend von deren vorderen Ende **43** bis zu deren hinteren Ende **44.** Die in Umfangsrichtung **25** konvexe eingeschriebene Fläche **48** blendet die in Umfangsrichtung **25** aufgrund der Rippen **30** lokal auftretenden Unebenheiten aus und beschreibt daher das tendenzielle Verhalten einer Seele **49** des Spreizkörpers **7.** Der Radius **46** der eingeschriebenen Fläche **48,** bzw. einer Seele **49,** verringert sich kontinuierlich oder monoton entlang der Setzrichtung **8.**

Die Mantelfläche **20** ist radial nach Außen durch die einhüllende Fläche **42** und radial nach Innen durch die eingeschriebene Fläche **48** begrenzt. In Umfangsrichtung **25** berührt die Mantelfläche **50** abwechselnd mit einer Dachfläche **37** und einer Bodenfläche **45** die einhüllende Fläche **42** bzw. die eingeschriebene Fläche **48.**

Die Neigung der Dachflächen **37** und die Neigung der Bodenflächen **45** gegenüber der Achse **4** sind gegenläufig, der Außendurchmesser des Spreizkörpers **7** vergrößert sich und der Innendurchmesser **46** der Seele **48** verringert sich. Die jeweiligen Winkel **41, 51** können betragsmäßig etwa gleich groß, zum Beispiel mit einer relativen Abweichung von bis zehn Prozent, sein. Der Zuwachs der Höhe der Rippen **30** wird durch tiefer werdende Rillen **31** ausgeglichen. Das Flächenvolumen von Querschnitten durch den Spreizkörper **7** und senkrecht zu der Achse **4** bleibt innerhalb des zweiten Bereichs **24** vorzugsweise konstant. Das Flächenvolumen entspricht beispielsweise dem Volumen eines Kreises mit einem Durchmesser gleich dem Basisdurchmesser **17.**

Eine Breite **52** der Rippen **30** und eine Breite **53** der Rillen **31,** d.h. ihre Abmessungen in Umfangsrichtung **25,** sind vorzugsweise ähnlich. Beispielsweise liegt das Verhältnis der beiden Breiten **52, 53** im Bereich zwischen 0,5 und 2. Die Breiten **52, 53** können auf halber radialer Höhe der Flanken **38** gemessen werden. Die Breite **52,** angegeben im Winkelmaß, der Rippen **30** bleibt vorzugsweise längs der Achse **4** gleich, ebenso bleibt die Breite **53** der Rillen **31** gleich.

Bei der dargestellten Ausführungsform sind alle Rippen **30** gleich ausgebildet, insbesondere hat jede der Dachflächen **37** eine gleiches Neigungsprofil gegenüber der Achse **4.** Eine Abwandlung sieht vor, dass abwechselnd eine Rippe eine größere mittlere Neigung und eine Rippe eine geringere mittlere Neigung aufweist.

An den zweiten Bereich **24** kann sich ein dritter Bereich **60** des Spreizkörpers **7** anschließen, in welchem das Querschnittsprofil konstant bleibt. Die Dachflächen **37** und die Bodenflächen **45** verlaufen in dem dritten Bereich **60** parallel zu der Achse **4.** Den dritten Bereich **60** schließt eine Stirnseite **61** des Ankerbolzens ab. Die Stirnseite **61** kann ballig abgerundet sein. Der Durchmesser **14** des Ankerbolzens **3** erhöht sich beginnend bei dem Hals **6** durchgehend bis zu der ggf. balligen Stirnfläche **61.**

Der Ankerbolzen **3** kann beispielsweise gewalzt werden. Ein zylindrischer Rohling **70** wird von einem Endlosdraht abgeschnitten. Ein Durchmesser **71** des Rohlings **70** entspricht vorzugsweise dem Durchmesser **17** des Schafts **5** des herzustellenden Ankerbolzens **3.** Da der Rohling **70** während des Walzens gelängt wird, ist eine Länge des Rohlings **70** kürzer als die Länge des herzustellenden Ankerbolzens **3.**

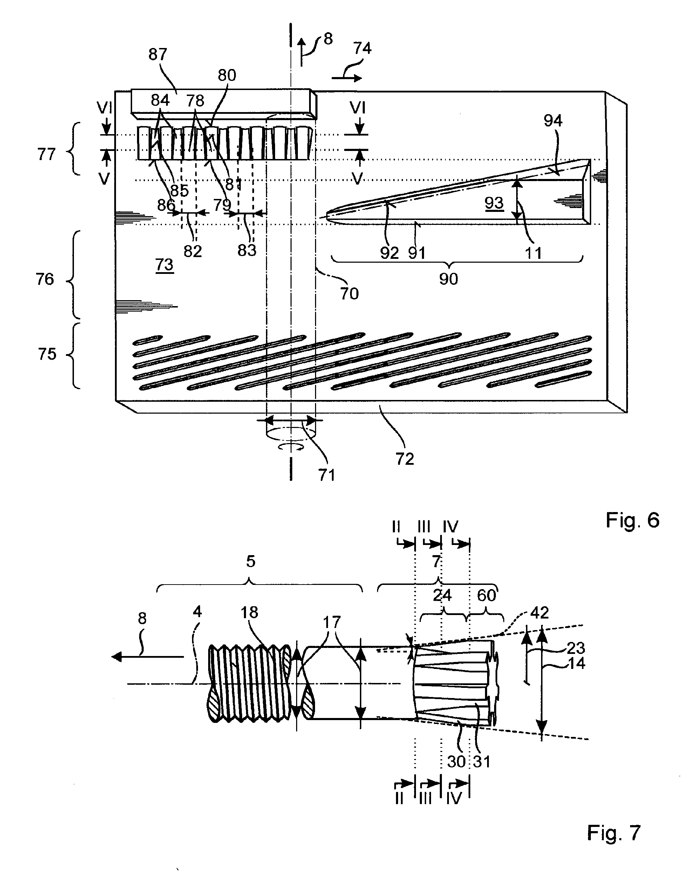

Aus dem Rohling **70** wird der Ankerbolzen **3** gewalzt. In Fig. 6 ist Walzprofil für den Ankerbolzen **3** beispielhaft auf einer Backenwalze **72** dargestellt. Eine Walzmaschine kann das Profil anstelle auf Backenwalzen auch abgewickelt auf Rollen aufweisen.

Auf einer ebenen Oberfläche **73** der Backenwalze **72** sind sich erhebende und abgesenkte Strukturen für ein Walzprofil vorgesehen. Der Rohling **70** wird längs einer Rollrichtung **74** über das Walzprofil auf der Oberfläche **73** gerollt. Eine zweite Backenwalze, vorzugsweise mit einem analogen Walzprofil, drückt den Rohling **70** senkrecht an das Walzprofil.

Entsprechend den herzustellenden Strukturen des Ankerbolzens **3** und deren Anordnung längs der Achse **4** des Ankerbolzens **3,** unterteilt sich das Walzprofil in verschiedene sich längs der Rollrichtung **74** ausgedehnte, streifenförmige Bereiche. Ein erster Bereich **75** kann beispielsweise mit einem Profil zum Walzen des Gewindes **18** vorgesehen sein. Ein zweiter Bereich **76** kann beispielsweise ohne Strukturen eben ausgebildet sein, welcher den Rohling **70** unverändert belässt, beispielsweise für den herzustellenden Schaft **5.** Ein dritter Bereich **77** dient der Herstellung des Spreizkörpers **7.**

Der Spreizkörper **7** wird beispielsweise in zwei aufeinander folgenden Walzschritten gefertigt. Die Rippen **30** und Rillen **31** werden in einem ersten Schritt in den Rohling **70** eingeprägt.

Mehrere keilförmige Erhebungen **78** sind parallel zueinander, versetzt zueinander längs der Rollrichtung **74** auf der Oberfläche **73** angeordnet. Die Zahl der Erhebungen **78** ist aus Gründen der Darstellung gegenüber einem realen Walzprofil deutlich verringert. Jede der Erhebungen **78** hat ein spitzes Ende **79,** an welchem die Erhebung **78** im wesentlichen in die ebene Oberfläche **73** übergeht, und ein stumpfes Ende **80,** an welchem sich die Erhebung **78** am meisten über die Oberfläche **73** erhebt. Die spitzen Enden **79** der Erhebungen **78** liegen vorzugsweise auf einer Linie parallel zu der Rollrichtung **74,** die stumpfen Enden **80** können ebenfalls auf einer Linie parallel zu der Rollrichtung **74** liegen. Ein spitzes Ende **79** und ein stumpfes Ende **80** einer Erhebung **78** sind senkrecht zu der Rollrichtung **74** versetzt angeordnet, beispielsweise besteht, wie dargestellt kein Versatz zwischen dem spitzen Ende **79** und dem stumpfen Ende **80** längs der Rollrichtung **74.** Eine gegenüber der Oberfläche **73** schräge Fläche **81** verläuft von dem spitzen Ende **79** zu dem stumpfen Ende **80.** Ein Neigungswinkel zwischen der Oberfläche **73** und der schrägen Fläche **81** liegt beispielsweise im Bereich zwischen 5 Grad und 30 Grad. Die Neigung kann konstant sein, oder variieren, sie ist bleibt jedoch von dem spitzen Ende **79** bis zu dem stumpfen Ende **80** positiv. Die Neigung der schrägen Fläche **81** kann von einer Erhebung **78** zur nächsten Erhebung **78** längs der Rollrichtung **74** zunehmen. Eine Breite **82** der Erhebungen **78,** d.h. ihre Abmessung längs der Rollrichtung **74,** bleibt vorzugsweise konstant oder etwa konstant. Ein Abstand **83** zwischen den Erhebungen **78** kann gleich oder etwa gleich der Breite **82** der Erhebungen **78** sein oder diese Abmessungen können in einem Verhältnis zwischen 0,5 und 2 stehen.

Zwischen den Erhebungen **78** ist eine Vertiefung **84** in die Oberfläche **73** eingebracht. Die Vertiefung **84** kann ebenfalls keilförmig ausgebildet sein, wobei die Keilform die Komplementärform zwischen der ebenen Oberfläche **73** und einer schrägen Fläche **85** der Vertiefung **84** beschreibt. Spitze Enden **86** der Vertiefung **84** liegen auf der gleichen Linie wie die spitzen Enden **79** der Erhebungen **78.** Die Vertiefung **84** geht an den spitzen Enden **79** in die ebene Oberfläche **73** über. Die schräge Fläche **85** der Vertiefung **84** ist gegenüber der Oberfläche **73** geneigt, wobei ein Vorzeichen der Neigung entgegengesetzt zu einem Vorzeichen der Neigung der schrägen Fläche **81** der Erhebungen **78** ist.

Längs einer ersten Linie V-V parallel zu der Rollrichtung **74** durch die Erhebungen **78** und Vertiefung **84** liegt das Walzprofil alternierend unterhalb der Oberfläche **73** und oberhalb der Oberfläche **73.** Entlang einer zweiten Linie VI-VI, die parallel zu der ersten Linie und zu dieser in Richtung zu den stumpfen Enden **79** hin versetzt ist, ist das Walzprofil ebenfalls alternierend unterhalb der Oberfläche 73 und oberhalb der Oberfläche 73, jedoch mit einem größeren Hub. Vorzugsweise erhöht sich der Hub kontinuierlich mit zunehmenden Versatz der zweiten Linie VI-VI gegenüber der ersten Linie VI-VI in Richtung zu dem stumpfen Ende **79.**

Die stumpfen Enden **79** schließen das Walzprofil an der einen Seite ab. Eine Führung **87** für den Rohling **70** kann an die stumpfen Enden **79** längs der Achse **4** angrenzen, um ein axiales Verschieben des Rohlings **70** beim Walzen zu unterbinden.

Die Erhebungen **78** prägen in den Rohling **70** die Rillen **31** ein. Das Material aus den Rillen **31** verteilt sich in Umfangsrichtung **25** oder Rollrichtung **74,** wodurch die Rippen **30** in etwa mit der Form der Vertiefungen **84** entstehen können. Der Rohling **70** kann beim Walzen über die Erhebungen **78** und Vertiefung **84** längs der Achse **4** abgestützt sein. Alternativ kann der Rohling **70** durch Reibkräfte senkrecht zu der Rollrichtung **74** gehalten werden. Hierdurch kann ein Fließen des Materials aus den Rillen **31** in Längsrichtung des Rohlings **70** zugunsten eines Aufbaus der Rippen **30** begünstigt werden. Fig. 7 deutet die Form eines umgeformten Rohling **70** in der in Fig. 6 dargestellten Stellung an.

Der glatte konische Abschnitt **21** des Spreizkörpers **7** kann zusammen mit dem Hals **6** gewalzt werden. Ein trapezförmiges Walzprofil **90** ist gegenüber der Oberfläche **73** erhaben. Das Walzprofil **90** hat zwei Flanken **91, 92,** deren Abstand längs einer Achse **4** des Rohlings **70** kontinuierlich in Rollrichtung **74** zunimmt. Der Abstand der Flanken **91** wächst bis auf die Länge des Halses **6** an. Die erste der Flanken **91** kann parallel zu der Rollrichtung **74** sein, die zweite der Flanken **92** ist gegenüber der Rollrichtung **74** geneigt. Eine Neigung der Flanken **91, 92** kann größer als 60 Grad sein und ist vorzugsweise konstant. Die Flanken **91, 92** strecken den Rohling **70,** um den Bereich für den Hals **6** auf den gewünschten Durchmesser **11** zu verringern. Eine Fläche **93** zwischen den Flanken **91, 92** ist vorzugsweise eben und parallel zu der Oberfläche **73.**

An die zweite Flanke **92** schließt sich längs der Rollrichtung **74** eine dritte Flanke **94** an, deren Neigung gegenüber der Oberfläche **73** geringer ist. Die dritte Flanke **94** beginnt, wenn der Abstand, gemessen senkrecht zur Rollrichtung **74,** der ersten Flanke **91** gegenüber der zweiten Flanke **92** gleich der Länge des Halses 6 ist. Die dritte Flanke **94** kann eine ebene Fläche sein. Die Neigung der dritten Flanke **94** gegenüber der Oberfläche **73** ist an den Winkel **22** des glatten Abschnitts **21** des Spreizkörpers **7** angepasst. Ein äußerster Punkt der dritten Flanke **94** bezogen auf die Achse **4** des Rohlings **70** fällt mit der Linie der spitzen Enden **79** zusammen. Die dritte Flanke **94** reduziert den Rohling **70** längs dessen Achse **4** bis angrenzend an die zu Rippen **30** und Rillen **31** strukturierten Bereiche **24.**

Der Abschnitt mit den Erhebungen **78** und Vertiefungen **84** zum Erstellen der Rippen **30** und das Walzprofil **90** zum Erstellen des glatten Konusabschnitt **21** können auf einer Walzmatrize oder mehreren Walzmatrizen angeordnet sein. Auch ist die Erfindung nicht auf deren Reihenfolge beschränkt. Eine weitere Ausführung sieht vor, den glatten Konusabschnitt **21** und die Rippen **30** gleichzeitig auszuprägen. Ein Abstand der Erhebungen **78** von der Flanke **92,** gemessen längs der Achse **4,** bleibt dabei vorzugsweise konstant. Die Erhebungen **78** sind somit längs einer Linie schräg zur Rollrichtung **74** angeordnet, die Linien V-V, VI-VI verlaufen parallel zu der Flanke **92.**

## Patentansprüche

1. Ankerbolzen **(3)** für einen Spreizanker **(1),** wobei der Ankerbolzen (3) einen zu einer Achse **(4)** koaxial angeordneten konusförmigen Spreizkörper **(7)** hat, wobei eine Mantelfläche **(20)** des Spreizkörpers **(7)** in Umfangsrichtung **(25)** alternierend Rippen **(30)** und Rillen **(31)** aufweist, **dadurch gekennzeichnet, dass** Dachflächen **(37)** der Rippen **(30)** sich in einer Richtung **(8)** längs der Achse **(4)** von der Achse **(4)** entfernen und wobei Bodenflächen **(45)** der Rillen **(31)** sich in der Richtung **(8)** der Achse **(4)** nähern.

2. Ankerbolzen nach Anspruch 1, **dadurch gekennzeichnet, dass** die Mantelfläche **(20)** des Spreizkörpers **(7)** in eine entlang einer Richtung **(8)** längs der Achse **(4)** sich radial erweiternde, in Umfangsrichtung **(25)** konvexe erste Hüllkurve **(42)** eingeschrieben ist und in die Mantelfläche **(20)** eine entlang der Richtung **(8)** sich radial verringernde, in Umfangsrichtung **(25)** konvexe zweite Hüllkurve **(48)** eingeschrieben ist, wobei die Mantelfläche **(20)** in Umfangsrichtung **(25)** alternierend mit den Dachflächen **(37)** die erste Hüllkurve **(42)** und mit den Bodenflächen **(45)** die zweite Hüllkurve **(48)** berührt.

3. Ankerbolzen nach Anspruch 1 oder 2, **gekennzeichnet durch** eine erste Differenz zwischen dem größten radialen Abstand **(39)** der Mantelfläche **(20)** zu der Achse **(4)** und dem geringsten radialen Abstand **(46)** der Mantelfläche **(20)** zu der Achse **(4)** bestimmt in einer ersten Schnittebene (II, III), weiche senkrecht zu der Achse **(4)** die Rippen **(30)** und die Rillen **(31)** schneidet, und **gekennzeichnet durch** eine zweite Differenz zwischen dem größten radialen Abstand **(39)** der Mantelfläche **(20)** und dem geringsten radialen Abstand **(46)** der Mantelfläche **(20)** in einer zu der ersten Schnittebene (II, III) parallelen, in der Richtung **(8)** versetzten, zweiten Schnittebene (III, IV), wobei die erste Differenz geringer als die zweite Differenz ist.

4. Ankerbolzen nach Anspruch 3, **dadurch gekennzeichnet, dass** eine Differenz zwischen dem größten radialen Abstand der Mantelfläche **(20)** zu der Achse **(4)** und dem geringsten radialen Abstand der Mantelfläche **(20)** zu der Achse **(4)** bestimmt in jeweils zu der ersten Schnittebene parallelen, in der Richtung **(8)** aufeinanderfolgenden Schnittebenen, kontinuierlich zunimmt.

5. Ankerbolzen nach Anspruch 3 oder 4, **dadurch gekennzeichnet, dass** ein Inhalt einer Querschnittsfläche des Spreizkörpers in jeder der Schnittebene (II, III, IV) gleich ist.

6. Ankerbolzen nach Anspruch 5, **dadurch gekennzeichnet, dass** der gleiche Inhalt der Querschnittsflächen, einem Inhalt einer Querschnittsfläche durch einen Schaft **(5)** des Ankerbolzens **(3)** entspricht.

7. Ankerbolzen **(3)** nach einem der vorhergehenden Ansprüche, **dadurch gekennzeichnet, dass** ein Verhältnis einer in Umfangsrichtung **(25)** bestimmten Abmessung der Dachflächen **(37)** zu einer in Umfangsrichtung **(25)** bestimmten Abmessung der Bodenfläche **(45)** zwischen 0,5 und 2 liegt.

8. Ankerbolzen (3) nach einem der vorhergehenden Ansprüche, **dadurch gekennzeichnet, dass** ein größter radialer Abstand **(39)** der Dachflächen **(37)** bezogen zu der Achse **(4)** zwischen zehn Prozent und fünfzig Prozent größer als der geringste radiale Abstand **(46)** der Bodenflächen **(45)** zu der Achse **(4)** ist.

9. Ankerbolzen **(3)** nach einem der vorhergehenden Ansprüche, **dadurch gekennzeichnet, dass** die Mantelfläche **(20)** einen sich in der Richtung **(8)** aufweitenden, glatten konusförmigen Abschnitt **(21)** aufweist, der in Umfangsrichtung **(25)** vollständig konvex ist, und die Rippen **(30)** und die Rillen **(31)** sich an diesen Abschnitt **(21)** in der Richtung **(8)** unmittelbar anschließen.

10. Ankerbolzen **(3)** nach Anspruch 9, **dadurch gekennzeichnet, dass** eine Neigung der Mantelfläche **(20)** in dem glatten konusförmigen Abschnitt **(21)** gegenüber der Achse **(4)** gleich einer Neigung der Dachflächen **(37)** der Rippen **(30)** gegenüber der Achse **(4)** aufweist.

11. Spreizanker **(1),** der einen Ankerbolzen **(3)** nach einem der vorhergehenden Ansprüche und eine Spreizhülse **(2)** aufweist, welche einen an den Spreizkörper **(7)** angrenzenden zylindrischen Hals **(6)** des Ankerbolzens **(3)** umgreift.

12. Herstellungsverfahren für einen Ankerbolzen **(3)** eines Spreizankers **(1)** mit den Schritten:
Abrollen eines zylindrischen Rohlings **(70)** auf einer Oberfläche mit einem aufgebrachten Walzprofil für einen strukturierten, konusförmigen Spreizkörper **(24),** das längs einer Rollrichtung **(74)** alternierend Erhebungen **(78)** und Vertiefung **(84)** aufweist, wobei in einer ersten Schnittebene (V) senkrecht zu einer Achse **(4)** des Rohlings **(70)** die Erhebungen **(78)** gegenüber der Vertiefung **(84)** um einen ersten Hub senkrecht zu der Oberfläche **(73)** angehoben sind und in einer zu der ersten Schnittebene (V) in einer zur Achse **(4)** parallelen Richtung **(8)** versetzten, parallelen zweiten Schnittebene (VI) die Erhebungen **(78)** gegenüber der Vertiefung **(84)** um einen zweiten Hub senkrecht zu der Oberfläche **(73)** angehoben sind und der erste Hub geringer als der zweite Hub ist.

13. Herstellungsverfahren nach Anspruch 12, **dadurch gekennzeichnet, dass** die Erhebungen **(78)** längs der Richtung **(8)** zunehmend von der Oberfläche **(73)** abheben und die Vertiefungen **(84)** längs der Richtung **(8)** zunehmend gegenüber der Oberfläche **(73)** absinken.

14. Herstellungsverfahren nach Anspruch 13, **dadurch gekennzeichnet, dass** der Rohling über ein trapezförmiges Walzprofil abgerollt wird, um einen Durchmesser **(17)** des Rohlings **(70)** auf einen Durchmesser **(11)** für einen Hals **(6)** des Ankerbolzens **(3)** zu reduzieren, und einen konvex, konusförmigen Übergang **(21)** zwischen dem Hals **(6)** und dem strukturierten, konusförmigen Spreizkörper **(24)** auszubilden.

15. Herstellungsverfahren für einen Spreizanker **(1)** nach einem der Ansprüche 12 bis 14, **dadurch gekennzeichnet, dass** zum Ausbilden einer Hülse **(2)** ein Blechstreifen um einen Hals **(6)** des Ankerbolzens **(3)** gewickelt wird.

## Claims

1. Anchor bolt (3) for an expansion anchor (1), wherein the anchor bolt (3) has a conical expansion body (7) arranged coaxially with an axis (4) and wherein an outside surface (20) of the expansion body (7) comprises alternating ribs (30) and grooves (31) in the circumferential direction (25), **characterised in that** top surfaces (37) of the ribs (30) diverge from the axis (4) in a direction (8) along the axis (4) and bottom surfaces (45) of the grooves (31) converge in the direction (8) of the axis (4).

2. Anchor bolt according to claim 1, **characterised in that** the outside surface (20) of the expansion body (7) is inscribed in a first envelope (42) that is convex in the circumferential direction (25) and expands radially in a direction (8) along the axis (4) and a second envelope (48) that is convex in the circumferential direction (25) and decreases radially in the direction (8) is inscribed in the outside surface (20), wherein the outside surface (20) contacts the first envelope (42) by means of the top surfaces (37) and the second envelope (48) by means of the bottom surfaces (45) in alternation in the circumferential direction (25).

3. Anchor bolt according to claim 1 or claim 2, **characterised by** a first difference between the largest radial distance (39) of the outside surface (20) from the axis (4) and the smallest radial distance (46) of the outside surface (20) from the axis (4) determined in a first intersecting plane (II, III) intersecting the ribs (30) and the grooves (31) perpendicularly to the axis (4) and **characterised by** a second difference between the largest radial distance (39) of the outside surface (20) and the smallest radial distance (46) of the outside surface (20) in a second intersecting plane (III, IV) parallel to the first intersecting plane (I, II) and offset in the direction (8), wherein the first difference is smaller than the second difference.

4. Anchor bolt according to claim 3, **characterised in that** the difference between the largest radial distance of the outside surface (20) from the axis (4) and the smallest radial distance of the outside surface (20) from the axis (4) determined in successive intersecting planes in the direction (8) each parallel to the first intersecting plane increases continuously.

5. Anchor bolt according to claim 3 or claim 4, **characterised in that** the content of a cross-sectional area of the expansion body is identical in each of the intersecting planes (II, III, IV).

6. Anchor bolt according to claim 5, **characterised in that** the identical content of the cross-sectional areas corresponds to the content of a cross-sectional area through a shank (5) of the anchor bolt (3).

7. Anchor bolt (3) according to one of the preceding claims, **characterised in that** the ratio of a dimension of the top surfaces (37) determined in the circumferential direction (25) to a dimension of the bottom surface (45) determined in the circumferential direction (25) is between 0.5 and 2.

8. Anchor bolt (3) according to one of the preceding claims, **characterised in that** the largest radial distance (39) of the top surfaces (37) in relation to the axis (4) is between ten per cent and fifteen per cent larger than the smallest radial distance (46) of the bottom surfaces (45) from the axis (4).

9. Anchor bolt (3) according to one of the preceding claims, **characterised in that** the outside surface (20) comprises a smooth conical portion (21) that expands in the direction (8) and is completely convex in the circumferential direction (25) and the ribs (30) and the grooves (31) immediately follow this portion (21) in the direction (8).

10. Anchor bolt (3) according to claim 9, **characterised in that** the inclination of the outside surface (20) in the smooth conical portion (21) relative to the axis (4) is identical to the inclination of the bottom surfaces (37) of the ribs (30) relative to the axis (4).

11. Expansion anchor (1) comprising an anchor bolt (3) according to one of the preceding claims and an anchor sleeve (2) embracing a cylindrical neck (6) of the anchor bolt (3) adjacent to the expansion body (7).

12. Method of producing an anchor bolt (3) of an expansion anchor (1), comprising the steps:
rolling a cylindrical blank (70) on a surface with an applied rolling profile for a structured, conical expansion body (24) comprising alternating protuberances (78) and depressions (84) in a rolling direction (74), wherein the protuberances (78) are raised relative to the depressions (84) by a first amount perpendicular to the surface (73) in a first intersecting plane (V) perpendicular to an axis (4) of the blank (70) and the protuberances (78) are raised relative to the depressions (84) by a second amount perpendicular to the surface (73) in a second intersecting plane (VI) parallel to the first intersecting plane (V) and offset in a direction (8) parallel to the axis (4), wherein the first amount is smaller than the second amount.

13. Production method according to claim 12, **characterised in that** the protuberances (78) are increasingly raised relative to the surface (73) in the direction (8) and the depressions (84) are increasingly lowered relative to the surface (73) in the direction (8).

14. Production method according to claim 13, **characterised in that** the blank is rolled over a trapezoidal rolling profile in order to reduce a diameter (17) of the blank (70) to a diameter (11) for a neck (6) of the anchor bolt (3) and to form a convex, conical transition (21) between the neck (6) and the structured, conical expansion body (24).

15. Method of producing an expansion anchor (1) according to one of claims 12 to 14, **characterised in that** a sheet-metal strip is wound around a neck (6) of the anchor bolt (3) in order to form a sleeve (2).

## Revendications

1. Boulon d'ancrage (3) pour un ancrage d'expansion (1), dans lequel le boulon d'ancrage (3) a un corps d'expansion conique (7) agencé coaxialement par rapport à un axe (4), dans lequel une surface latérale (20) du corps d'expansion (7) comporte des nervures (30) et des rainures (31) en alternance dans une direction circonférentielle (25), **caractérisé en ce que** des surfaces supérieures (37) des nervures (30) s'éloignent de l'axe (4) dans une direction (8) le long de l'axe (4) et dans lequel des surfaces inférieures (45) des rainures (31) se rapprochent dans la direction (8) de l'axe (4).

2. Boulon d'ancrage selon la revendication 1, **caractérisé en ce que** la surface latérale (20) du corps d'expansion (7) est inscrite dans une première courbe enveloppe (42) convexe dans une direction circonférentielle (25), s'élargissant radialement le long d'une direction (8) le long de l'axe (4), et **en ce qu'**une seconde courbe enveloppe (48) convexe dans la direction circonférentielle (25), s'amincissant radialement le long de la direction (8), est inscrite dans la surface latérale (20), dans lequel la surface latérale (20) dans la direction circonférentielle (25) touche alternativement la première courbe enveloppe (42) avec les surfaces supérieures (37) et la seconde courbe enveloppe (48) avec les surfaces inférieures (45).

3. Boulon d'ancrage selon la revendication 1 ou 2, **caractérisé par** une première différence entre la plus grande distance radiale (39) de la surface latérale (20) par rapport à l'axe (4) et la plus petite distance radiale (46) de la surface latérale (20) par rapport à l'axe (4) déterminée dans un premier plan de coupe (II, III), lequel plan coupe les nervures (30) et les rainures (31) perpendiculairement à l'axe (4), et **caractérisé par** une seconde différence entre la plus grande distance radiale (39) de la surface latérale (20) et la plus petite distance radiale (46) de la surface latérale (20) dans un second plan de coupe (III, IV) décalé dans la direction (8) et parallèle au premier plan de coupe (II, III), la première différence étant plus petite que la seconde différence.

4. Boulon d'ancrage selon la revendication 3, **caractérisé en ce qu'**une différence entre la plus grande distance radiale de la surface latérale (20) par rapport à l'axe (4) et la plus petite distance radiale de la surface latérale (20) par rapport à l'axe (4) déterminée dans chacun des plans de coupe consécutifs dans la direction (8) et parallèles au premier plan de coupe, augmente de manière continue.

5. Boulon d'ancrage selon la revendication 3 ou 4, **caractérisé en ce qu'**un contenu d'une surface de coupe du corps d'expansion est identique dans chaque plan de coupe (II, III, IV).

6. Boulon d'ancrage selon la revendication 5, **caractérisé en ce que** le contenu identique des surfaces de coupe correspond à un contenu d'une surface de coupe à travers une tige (5) du boulon d'ancrage (3).

7. Boulon d'ancrage (3) selon l'une des revendications précédentes, **caractérisé en ce qu'**un rapport d'une dimension des surfaces supérieures (37) déterminée dans la direction circonférentielle (25) sur une dimension de la surface inférieure (45) déterminée dans la direction circonférentielle (25) est compris entre 0,5 et 2.

8. Boulon d'ancrage (3) selon l'une des revendications précédentes, **caractérisé en ce que** la plus grande distance radiale (39) des surfaces inférieures (37) par rapport à l'axe (4) est entre dix pour-cent et quinze pour-cent plus grande que la plus petite distance radiale (46) des surfaces inférieures (45) par rapport à l'axe (4).

9. Boulon d'ancrage (3) selon l'une des revendications précédentes, **caractérisé en ce que** la surface latérale (20) comporte une partie conique lisse (21) s'étendant dans la direction (8), laquelle partie est entièrement convexe dans la direction circonférentielle (25), et les nervures (30) et les rainures (31) sont directement contigües dans la direction (8) sur cette partie (21).

10. Boulon d'ancrage (3) selon la revendication 9, **caractérisé en ce qu'**une inclinaison de la surface latérale (20) dans la partie conique lisse (21) par rapport à l'axe (4) est égale à une inclinaison des surfaces inférieures (37) des nervures (30) par rapport à l'axe (4).

11. Ancrage d'expansion (1) comportant un boulon d'ancrage (3) selon l'une des revendications précédentes et une douille d'expansion (2), laquelle douille d'expansion s'engage autour d'un col cylindrique (6) adjacent au corps d'expansion (7) du boulon d'ancrage (3).

12. Procédé de fabrication pour un boulon d'ancrage (3) d'un ancrage d'expansion (1), comportant les étapes consistant à :
rouler une ébauche cylindrique (70) sur une surface avec un profilé laminé appliqué pour un corps d'expansion (24) conique, structuré, qui comporte des élévations (70) et des creux (84) en alternance le long d'une direction de laminage (74), dans lequel dans un premier plan de coupe (V) perpendiculaire à un axe (4) de l'ébauche (70), les élévations (78) sont surélevées par rapport au creux (84) d'une première hauteur perpendiculaire à la surface (73) et dans un second plan de coupe parallèle (VI) au premier plan de coupe (V) et décalé dans une direction (8) parallèle à l'axe (4), les élévations (78) sont surélevées par rapport au creux (84) d'une seconde hauteur perpendiculaire à la surface (73), et la première hauteur est plus petite que la seconde hauteur.

13. Procédé de fabrication selon la revendication 12, **caractérisé en ce que** les élévations (78) s'élèvent progressivement le long de la direction (8) à partir de la surface (73) et les creux (84) s'enfoncent progressivement le long de la direction (8) par rapport à la surface (73).

14. Procédé de fabrication selon la revendication 13, **caractérisé en ce que** l'ébauche est roulée sur un profilé laminé trapézoïdal afin de ramener un diamètre (17) de l'ébauche (70) à un diamètre (11) pour un col (6) du boulon d'ancrage (3), et de former une transition(21) conique, convexe, entre le col (6) et le corps d'expansion (24) conique, structuré.

15. Procédé de fabrication pour un boulon d'expansion (1) selon l'une des revendications 12 à 14, **caractérisé en ce qu'**une bande de tôle est enroulée autour d'un col (6) du boulon d'ancrage (3) pour former une douille (2).
